# FASCICULE DE BREVET EUROPEEN

(11) **EP 1 175 830 B1**
(45) Date de publication et mention de la délivrance du brevet: **12.11.2003**
(21) Numéro de dépôt: 01203451.8
(22) Date de dépôt: 23.06.1999
(51) Int. Cl.: A01K 7/06

(54) **Bol d'abreuvement pour animaux et son procédé de fabrication**
Tränkebecken für Tiere und dessen Herstellungsverfahren
Drinking bowl for animals and process for producing the same

(30) Priorité: 01.07.1998 FR 9808397
(43) Date de publication de la demande: 30.01.2002
(62) Demande divisionnaire de: 99401552.7
(73) Titulaire: La Buvette, 08090 Tournes (FR)
(72) Inventeur: Gustin, Jean-Pierre, 08000 Charleville Mezieres (FR)
(74) Mandataire: Kaspar, Jean-Georges

(56) Documents cités:
- EP-A- 0 087 589
- EP-A- 0 500 186
- DE-A- 3 744 483
- BROUWERS STALINRICHTINGEN: "Prijscourant 06/07/92" 6 juillet 1992 (1992-07-06) , L.S. BROUWERS , LEEUWARDEN (N) XP002184890 * page 64-65 *
- SUEVIA HAIGES GMBH & CO: "Abreuvoir Mod. 97" 1997 , SUEVIA , KIRCHHEIM/NECKAR (D) XP002184891 * le document en entier *

## Description

Il est connu de faire des bols d'abreuvement pour animaux notamment pour porcins constitués par un récipient à fond plat et rebord ovale, le fond plat étant, lors de la mise en place, fixé à une paroi verticale. De tels bols sont fabriqués en général en métal et sont rigidifiés par leur rebord qui est replié sur un peu plus de 180°.

Ces pièces, étant destinées à un marché très concurrentiel, nécessitent cependant des outillages chers et complexes si l'on veut une bonne qualité d'embouti (aspect, rigidité, précision, etc...). D'autre part, comme de par leur forme ils ne sont pas assez rigides, il est nécessaire de les rigidifier en enroulant leur rebord. Non seulement cette opération est assez longue et onéreuse, mais encore, cet enroulement n'étant jamais parfait, il se forme des nids microbiens c'est-à-dire des zones qu'il n'est pratiquement pas possible de nettoyer.

La présente invention a pour objet un bol d'abreuvement en métal de fabrication simple et ne comportant pas les inconvénients cités ci-dessus.

Le bol selon l'invention comporte une première partie en contact avec les animaux et une deuxième partie constituant le fond du bol, ladite deuxième partie comportant une portion plane. Le bol selon l'invention est caractérisé par le fait qu'il présente un rebord incurvé vers l'extérieur étant produit par emboutissage, de manière à rigidifier le bol sans opération longue et onéreuse d'enroulement, tout en évitant la création d'espace difficilement nettoyable pouvant devenir un foyer microbien.

Le bol selon l'invention est avantageusement constitué d'un corps cylindrique de révolution (ou sensiblement cylindrique) et d'un fond comportant une portion sphérique et une partie plane (ou sensiblement sphérique) (ou sensiblement plane) contenue dans un plan faisant un angle d'environ 60° avec l'axe du cylindre, de telle sorte que, en position d'utilisation, la partie plane étant dans un plan vertical, l'axe du cylindre soit dirigé environ à 30° de l'horizontale vers le haut et la partie sphérique, située à la base de la partie plane, constitue un récipient pour l'eau d'abreuvement ; le rebord circulaire du bol étant incurvé d'environ 90° vers l'extérieur.

La présente invention concerne également un procédé de fabrication d'un tel bol d'abreuvement selon lequel dans un premier temps on découpe dans une feuille de métal un flanc circulaire plat ; dans un deuxième temps, le rebord du disque circulaire étant tenu dans un serre flanc, la pièce est emboutie au moyen d'un poinçon de section circulaire (ou sensiblement circulaire) et dont la pointe est une demi-sphère (ou sensiblement), ce qui donne un flanc en forme de cloche hémisphérique avec jupe cylindrique ; dans un troisième temps on réalise un deuxième emboutissage avec un deuxième poinçon dont l'extrémité comporte une portion hémisphérique coupée par une portion plane (ou sensiblement) contenue dans un plan faisant environ 60° avec l'axe du poinçon ; dans un quatrième temps on réalise les perçages nécessaires à la mise en place de la robinetterie.

A titre d'exemple non limitatif, et pour faciliter la compréhension de l'invention, on a représenté aux dessins annexés :
Figure 1 : une vue en élévation latérale et en coupe d'un exemple de réalisation de l'invention ;
Figure 2 : une vue schématique illustrant le premier emboutissage ;
Figure 3 : une vue schématique illustrant le deuxième emboutissage ;
Figure 4 : une vue de détail illustrant le rebord du bol selon l'invention ;
Figure 5 une vue de détail illustrant le rebord d'un bol de l'art antérieur.

En se reportant à ces figures on voit que le bol d'abreuvement selon l'invention est en deux parties : une première partie 1 qui est un cylindre de révolution d'axe X-X et une deuxième partie 2, qui constitue le fond du bol, cette partie comportant une portion sphérique 3 et une portion plane 4. Ces deux parties sont séparées par le plan P-P qui est perpendiculaire à l'axe X-X du cylindre de révolution 1. La partie plane 4 est contenue dans un plan T-T qui fait avec l'axe X-X un angle d'environ 60° et donc un angle complémentaire d'environ 30° avec le plan P-P.

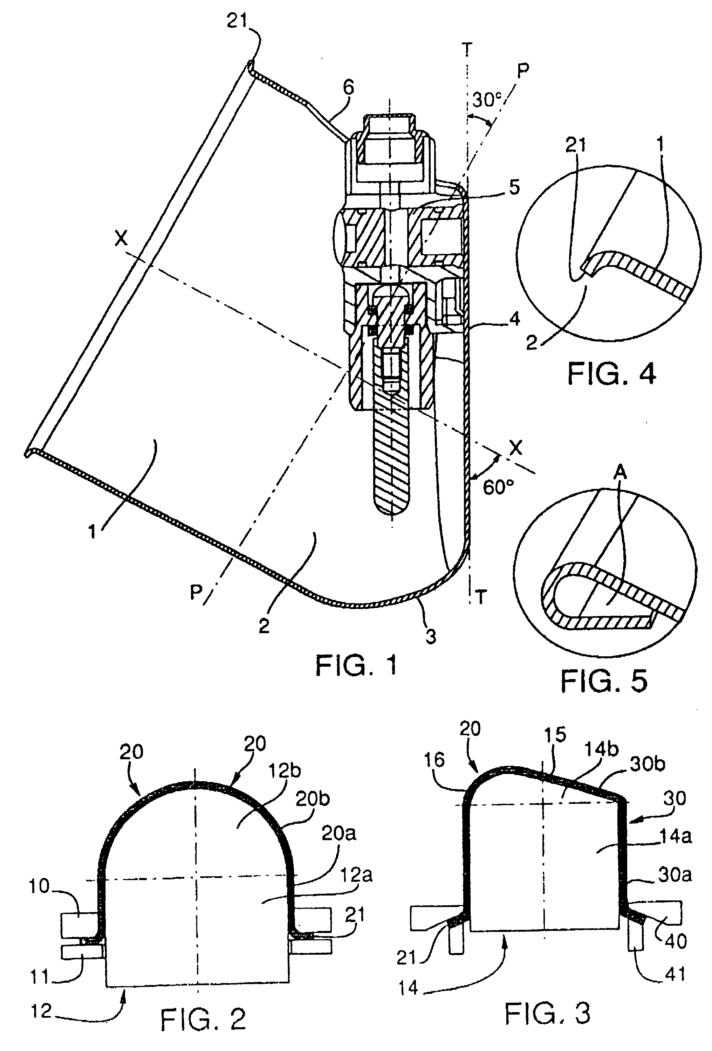

Lorsque le bol est en position d'utilisation, qui est celle représentée à la figure 1, la partie plane 4 est en position verticale, par exemple fixée à une paroi verticale (non représentée) telle que le mur d'une porcherie, et du fait de l'inclinaison vers le bas de l'axe X-X, la portion sphérique 3 qui est en position inférieure constitue un récipient pouvant recevoir l'eau d'abreuvage.

La robinetterie usuelle 5 est fixée à la paroi plane 4 et fait saillie hors du bol par un orifice 6 ménagé à travers la paroi supérieure de la partie cylindrique 1.

Les figures 2 et 3 sont destinées à illustrer le procédé de fabrication du bol de la figure 1.

Dans un premier temps, on découpe dans une feuille de métal et de préférence d'acier inoxydable un flanc constitué par un disque circulaire.

Dans un deuxième temps, on fixe ce flanc au moyen d'un serre-flanc 11 et on procède à un premier emboutissage au moyen d'un poinçon 12. Ce poinçon comporte une première partie 12a qui est un cylindre de révolution et une deuxième partie 12b qui est une demi-sphère dont le rayon est égal à celui de la partie 12a. On obtient ainsi une ébauche 20 qui a une forme en cloche correspondant à celle du poinçon 12, c'est-à-dire une partie 20a, cylindrique de révolution et une partie 20b qui est une demi-sphère. Cette ébauche 20 comporte un rebord circulaire 21, serré entre la matrice 10 et le serre-flanc 11, qui est recourbé pratiquement à 90° par rapport à la paroi cylindrique 20a.

Dans un troisième temps, l'ébauche 20 est soumise à un deuxième emboutissage au moyen d'un deuxième poinçon 14. Ce deuxième poinçon 14 est également en deux parties : une première partie 14a qui est un cylindre de révolution ayant un diamètre plus petit que celui de la partie 12a du poinçon précédent 12, mais une longueur plus grande et une deuxième partie 14b qui est elle-même en deux portions : une portion plane 15 et une portion hémisphérique 16 dont le rayon est différent que celui de la demi-sphère 12b.

La partie plane 15 est contenue dans un plan qui fait un angle d'environ 60° avec l'axe du poinçon 14.

Pour ce deuxième emboutissage, l'ébauche 20 est tenu dans une matrice 40 et un serre-flanc 41 qui maintiennent le rebord 21 de la nouvelle ébauche 30 en lui donnant, par rapport aux parois cylindriques 30a de l'ébauche 30, un angle un peu inférieur à 90°.

Il s'avère que ce deuxième emboutissage qui se traduit par un étirage de l'ébauche 20 pour obtenir l'ébauche 30, a pour effet un épaississement du rebord 21, compensé par un léger amincissement des parois des parties 30a et 30b.

Ainsi, avec une tôle de 12 dixièmes de millimètre, le bord 21 atteint une épaisseur de pratiquement 14 dixièmes.

Les bols emboutis de type connu sont ovales, ce qui a pour résultat qu'ils résistent mal aux efforts de déformation ; de sorte qu'il est nécessaire de les rigidifier. Pour cela, on enroule leur rebord en le repliant sur plus de 180° comme cela est illustré à la figure 5. Cette façon de procéder présente deux inconvénients : cet enroulage est relativement onéreux et crée un espace A qui est difficilement nettoyable et qui devient vite un foyer microbien.

Par contre, le bol selon l'invention étant cylindrique dans sa partie en contact avec les animaux, est auto-résistant et son rebord 21 n'a pas besoin d'être enroulé (d'autant moins qu'il est épaissi). Cela est moins cher et plus hygiénique.

Pour éviter que le rebord 21 soit coupant, un billage peut être effectué pour en arrondir les arêtes.

## Revendications

1. Bol d'abreuvement pour animaux notamment pour porcins, en métal embouti, comportant une première partie (1) faisant face aux animaux et une deuxième partie (2) constituant le fond du bol, ladite deuxième partie (2) comportant une portion plane (4), **caractérisé par le fait que** le bol présente un rebord (21) incurvé vers l'extérieur étant produit par emboutissage, de manière à rigidifier le bol sans opération longue et onéreuse d'enroulement, tout en évitant la création d'espace (A) difficilement nettoyable pouvant devenir un foyer microbien.

2. Bol d'abreuvement selon la revendication 1, **caractérisé par le fait que** le rebord (21) incurvé est obtenu lors d'un deuxième emboutissage ayant pour effet un épaississement du rebord (21)..

3. Bol selon la revendication 1 **caractérisé par le fait qu'**il est constitué d'un corps sensiblement cylindrique de révolution (1) et d'un fond (2) comportant une portion sensiblement sphérique (3) et une portion sensiblement plane (4), contenue dans un plan (T-T) faisant un angle d'environ 60° avec l'axe (X-X) du cylindre (1).

4. Bol selon la revendication 3 **caractérisé par le fait que** le rebord (21) de la portion cylindrique (1) est incurvé vers l'extérieur d'environ 90°.

5. Bol selon la revendication 3 ou 4, **caractérisé par le fait qu'**en utilisation, la paroi plane (4) est en position verticale, l'axe (X-X) de la partie cylindrique (1) étant incliné vers le bas d'environ 30° par rapport à l'horizontale ; la partie sphérique (3) se trouvant en position inférieure et constituant un récipient recueillant l'eau d'abreuvement.

6. Procédé de fabrication du bol selon les revendications 1 à 5 selon lequel : dans un premier temps, on découpe dans une feuille de tôle en métal un flanc circulaire plat ; dans un deuxième temps, le rebord (21) du disque circulaire étant tenu par un serre-flanc (11) le flanc est embouti au moyen d'un poinçon (12) de section circulaire dont l'extrémité (12b) est une demi-sphère ; dans un troisième temps, l'ébauche (20) précédemment obtenue est soumise à un deuxième emboutissage avec un deuxième poinçon (14) dont l'extrémité comporte une partie plane (15) et une partie sphérique (16).

7. Procédé selon la revendication 6, selon lequel la partie cylindrique (14a) du deuxième poinçon (14) a une longueur supérieure celle de la partie cylindrique (12a) du premier poinçon (12).

8. Procédé selon la revendication 7, selon lequel le rayon de courbure de la partie hémisphérique (16) du deuxième poinçon peut être différent de celui de la partie en demi-sphère du premier poinçon (12).

## Patentansprüche

1. Tränkbecken für Tiere, insbesondere für Schweine, aus getriebenem Metall, mit einem ersten Teil (1), das den Tieren zugewandt ist, und einem zweiten Teil (2), das den Boden des Beckens bildet, wobei das zweite Teil (2) einen ebenen Abschnitt (4) umfaßt, **dadurch gekennzeichnet, daß** das Becken einen Rand (21) aufweist, der nach außen gebogen und durch einen Ziehvorgang gebildet ist, um das Becken ohne einen langen und aufwendigen Einrollvorgang zu versteifen, wobei gleichzeitig die Bildung eines Raumes (A) vermieden wird, der schwierig zu reinigen ist und zu einem Mikrobenherd werden kann.

2. Tränkbecken nach Anspruch 1, **dadurch gekennzeichnet, daß** der gebogene Rand (21) bei einem zweiten Ziehvorgang erhalten wird, der eine Verdickung des Randes (21) bewirkt.

3. Becken nach Anspruch 1, **dadurch gekennzeichnet, daß** es durch einen im wesentlichen zylindrischen Drehkörper (1) und einen Boden (2) mit einem im wesentlichen kugelförmigen Abschnitt (3) und einen im wesentlichen ebenen Abschnitt (4) gebildet ist, der in einer Ebene (T-T) enthalten ist, die mit der Achse (X-X) des Zylinders (1) einen Winkel von etwa 60° bildet.

4. Becken nach Anspruch 3, **dadurch gekennzeichnet, daß** der Rand (21) des zylindrischen Abschnitts (1) um etwa 90° nach außen gebogen ist.

5. Becken nach Anspruch 3 oder 4, **dadurch gekennzeichnet, daß** sich bei Gebrauch die ebene Wand (4) in einer vertikalen Stellung befindet, wobei die Achse (X-X) des zylindrischen Abschnitts (1) um etwa 30° zur Horizontalen nach unten geneigt ist, sich der kugelförmige Abschnitt (3) in einer unteren Stellung befindet und eine Aufnahme bildet, welche das Tränkwasser aufnimmt.

6. Verfahren zur Herstellung des Beckens nach den Ansprüchen 1 bis 5, bei dem zuerst eine kreisförmige, flache Flanke aus einer Metallblechfolie zugeschnitten wird, danach, während der Rand (21) der kreisförmigen Scheibe von einem Niederhalter (11) gehalten wird, die Flanke mittels eines Dorns (12) mit kreisförmigem Querschnitt gezogen wird, dessen Ende (12b) eine Halbkugel ist, und sodann der zuvor erhaltene Rohling (20) einem zweiten Ziehvorgang mit einem zweiten Dorn (14) unterzogen wird, dessen Ende einen ebenen Abschnitt (15) und einen kugelförmigen Abschnitt (16) umfaßt.

7. Verfahren nach Anspruch 6, bei dem der zylindrische Abschnitt (14a) des zweiten Dorns (14) eine größere Länge als der zylindrische Abschnitt (12a) des ersten Dorns (12) aufweist.

8. Verfahren nach Anspruch 7, bei dem der Krümmungsradius des halbkugelförmigen Abschnitts (16) des zweiten Dorns von dem des halbkugelförmigen Abschnitts des ersten Doms (12) unterschiedlich ist.

## Claims

1. A drinking bowl for animals, in particular pigs, made of metal drawn into a cup shape, having a first part (1) facing the animals and a second part (2) forming the base of the bowl, the said second part (2) having a planar portion (4), **characterised in that** the bowl has an edge (21) which is curved outwards and is produced by a drawing process, such that the bowl is made more rigid without a long and complicated collaring operation, while preventing a space (A) which is difficult to clean and which may harbour microbes from being created.

2. A drinking bowl according to Claim 1, **characterised in that** the curved edge (21) is obtained during a second drawing process which results in the edge (21) being thickened.

3. A bowl according to Claim 1, **characterised in that** it is formed from a body which is substantially a cylinder of revolution (1) and from a base (2) having a substantially spherical portion (3) and a substantially planar portion (4) which is contained within a plane (T-T) forming an angle of approximately 60° with the axis (X-X) of the cylinder (1).

4. A bowl according to Claim 3, **characterised in that** the edge (21) of the cylindrical portion (1) is curved outwards by approximately 90°.

5. A bowl according to Claim 3 or 4, **characterised in that** in use the planar wall (4) is in the vertical position with the axis (X-X) of the cylindrical part (1) inclined downwards by approximately 30° with respect to the horizontal, and the spherical part (3) being located in the lower position and forming a receptacle receiving the drinking water.

6. A process for manufacturing the bowl according to Claims 1 to 5, in which: in a first step, a flat circular blank is cut out of a piece of sheet metal; in a second step, while the edge (21) of the circular disc is held by a blank holder (11), the blank is drawn by means of at least one punch (12) of circular section, whereof the end (12b) is a hemisphere; in a third step, the preliminary part (20) which has been obtained so far is subjected to a second drawing process with a second punch (14) whereof the end has a planar part (15) and a spherical part (16).

7. A process according to Claim 6, in which the cylindrical part (14a) of the second punch (14) is greater in length than the cylindrical part (12a) of the first punch (12).

8. A process according to Claim 7, in which the radius of curvature of the hemispherical part (16) of the second punch may be different from that of that part of the first punch (12) which is in the shape of a hemisphere.
